(19)

Europäisches
Patentamt
European
Patent Office
Office européen
des brevets

(11) **EP 2 947 500 A1**

(12) **EUROPEAN PATENT APPLICATION**

(43) Date of publication:
**25.11.2015 Bulletin 2015/48**

(51) Int Cl.:
**G02B 27/01** (2006.01)   **G02F 1/1335** (2006.01)

(21) Application number: **15158776.3**

(22) Date of filing: **12.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **21.05.2014 JP 2014105254**

(71) Applicant: **Kabushiki Kaisha Toshiba
Tokyo 105-8001 (JP)**

(72) Inventors:
• **Tsuruyama, Tomoya
Tokyo, 105-8001 (JP)**

• **Sasaki, Takashi
Tokyo, 105-8001 (JP)**
• **Baba, Masahiro
Tokyo, 105-8001 (JP)**
• **Kokojima, Yoshiyuki
Tokyo, 105-8001 (JP)**
• **Hotta, Aira
Tokyo, 105-8001 (JP)**
• **Sawada, Shimpei
Tokyo, 105-8001 (JP)**

(74) Representative: **Hoffmann Eitle
Patent- und Rechtsanwälte PartmbB
Arabellastraße 30
81925 München (DE)**

(54) **Display device**

(57)     According to one embodiment, a display device (100, 101, 102, 103, 104) includes a display unit (160), a reflective/transmissive unit (110), and an optical unit (150). The display unit (160) emits image light including image information. The reflective/transmissive unit (110) reflects at least a portion of the image light and transmits at least a portion of background light. The optical unit (150) is provided between the display unit (160) and the reflective/transmissive unit (110) in an optical path of the image light. A refractive power of the optical unit (150) is determined according to a refractive power of the reflective/transmissive unit (110) for the background light passing through the reflective/transmissive unit (110).

EP 2 947 500 A1

FIG. 1

**Description**

FIELD

Embodiments described herein relate generally to a display device.

BACKGROUND

For example, in a display device such as a head mounted display (HMD), etc., an optical element is used to display an image by guiding light emitted from the display device to the front of an eye of a user. There are cases where such a display device is used in combination with a vision correction device such as eyeglasses, etc. The display device may become bulky when the display device is mounted on the eyeglasses. In such a display device, an easily-viewable display is desirable while suppressing the bulkiness of the display device.

BRIEF DESCRIPTION OF THE DRAWINGS

FIG. 1 is a schematic view illustrating a display device according to a first embodiment;
FIG. 2A and FIG. 2B are schematic views illustrating the refractive power;
FIG. 3A and FIG. 3B are schematic views illustrating the incident angle of the image light;
FIG. 4A and FIG. 4B are schematic views illustrating the refractive power;
FIG. 5 is a schematic view illustrating a display device according to a second embodiment;
FIG. 6 is a schematic view illustrating another display device according to the second embodiment;
FIG. 7A and FIG. 7B are schematic views illustrating another display device according to the second embodiment;
FIG. 8A and FIG. 8B are schematic views illustrating another display device according to the second embodiment;
FIG. 9A and FIG. 9B are schematic views illustrating the optical unit according to the embodiment; and
FIG. 10 is a schematic view illustrating the display device according to the embodiment.

DETAILED DESCRIPTION

According to one embodiment, a display device includes a display unit, a reflective/transmissive unit, and an optical unit. The display unit emits image light including image information. The reflective/transmissive unit reflects at least a portion of the image light and transmits at least a portion of background light. The optical unit is provided between the display unit and the reflective/transmissive unit in an optical path of the image light. A refractive power of the optical unit is determined according to a refractive power of the reflective/transmissive unit for the background light passing through the reflective/transmissive unit.

According to one embodiment, a display device includes a display unit and an optical unit. The display unit emits image light including image information. The image light passes through the optical unit. The image light emitted from the optical unit is incident on a reflective/transmissive unit. The reflective/transmissive unit reflects at least a portion of the incident image light. The reflective/transmissive unit transmits background light. A refractive power of the optical unit is determined according to a refractive power of the reflective/transmissive unit for the background light passing through the reflective/transmissive unit.

Embodiments will now be described with reference to the drawings.

The drawings are schematic or conceptual; and the relationships between the thicknesses and widths of portions, the proportions of sizes between portions, etc., are not necessarily the same as the actual values thereof. Further, the dimensions and/or the proportions may be illustrated differently between the drawings, even in the case where the same portion is illustrated.

In the drawings and the specification of the application, components similar to those described in regard to a drawing thereinabove are marked with like reference numerals, and a detailed description is omitted as appropriate.

First embodiment

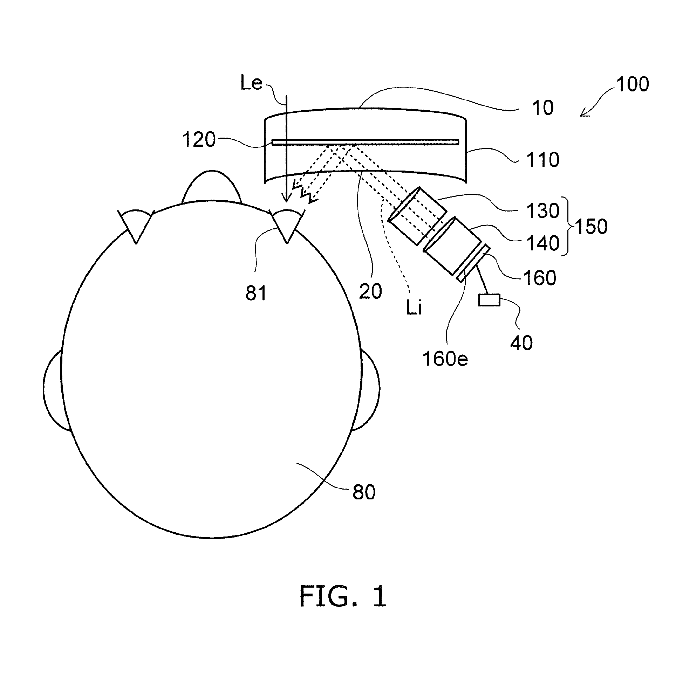

FIG. 1 is a schematic view illustrating a display device according to a first embodiment.

As shown in FIG. 1, the display device 100 according to the embodiment includes a reflective/transmissive unit 110, an optical unit 150, and a display unit 160.

For example, image information is input to the display unit 160 from a processing unit 40. Image light Li that includes the image information is emitted from the display unit 160. The image light Li travels via the optical unit 150 and is incident on the reflective/transmissive unit 110. In the reflective/transmissive unit 110, at least a portion of the image light Li is reflected toward an eye 81 of a viewer 80. Thereby, the viewer 80 can view the image.

The display unit 160 includes multiple pixels 160e. Each of the multiple pixels 160e emits light corresponding to the image information. For example, the display unit 160 is a display that displays the image. The light that includes the image information is emitted toward the optical unit 150. The display includes, for example, a liquid crystal, organic EL, liquid crystal on silicon, etc. However, the embodiment is not limited thereto.

The optical unit 150 is provided between the display unit 160 and the reflective/transmissive unit 110 in the optical path of the image light Li. The optical unit 150 includes, for example, an optical correction unit 130 (a correction lens group) and a projector 140.

The projector 140 includes, for example, multiple optical elements. The optical elements may include lenses, prisms, mirrors, etc. For example, the projector 140 projects the image light Li toward the reflective/transmissive unit 110 and the eye 81.

The optical correction unit 130 includes, for example, multiple optical elements. At least one lens group is used as the multiple optical elements. For example, the optical correction unit 130 refracts the image light Li.

The refractive power of the optical correction unit 130 is adjusted. The refractive power of the optical correction unit 130 is determined according to the refractive power of the reflective/transmissive unit 110. Thereby, for example, an easily-viewable display can be obtained.

In the example, the optical correction unit 130 is provided between the projector 140 and the reflective/transmissive unit 110 in the optical path of the image light Li. However, the order of the projector 140 and the optical correction unit 130 may be interchanged.

In the example, the optical correction unit 130 and the projector 140 are described as different components for convenience. In the embodiment, the optical correction unit 130 and the projector 140 may be considered to be one optical unit. For example, at least a portion of the functions of the optical correction unit 130 may be integrated with the functions of the lenses included in the projector 140.

The reflective/transmissive unit 110 has a first surface 10 and a second surface 20. The second surface 20 is on the side opposite to the first surface 10. For example, the second surface 20 is provided between the first surface 10 and the optical unit 150. The second surface 20 is the surface on which the image light Li is incident.

For example, the reflective/transmissive unit 110 includes a reflector 120. The reflector 120 is provided between the first surface 10 and the second surface 20. For example, the reflector 120 reflects at least a portion of the image light Li toward the eye 81.

The reflective/transmissive unit 110 also is transmissive. The reflective/transmissive unit 110 transmits at least a portion of light (background light Le) traveling toward the eye 81 from the external environment. Thereby, the viewer 80 can view the external environment.

Thus, the reflective/transmissive unit 110 is a combiner that is reflective and transmissive. Thereby, for example, the viewer 80 can view the display image while viewing the external environment.

The reflective/transmissive unit 110 may include, for example, a corrective lens such as that of eyeglasses, etc. Similarly to normal eyeglasses, the inner surface (the second surface 20) and the outer surface (the first surface 10) of the reflective/transmissive unit 110 may have curvatures. For example, the reflective/transmissive unit 110 corrects at least one of nearsightedness, farsightedness, or astigmatism. The refractive power of the reflective/transmissive unit 110 for the background light is determined according to a first refractive power D1 of the first surface 10 and a second refractive power of the second surface 20.

The reflector 120 may include glass, acrylic, etc. A mirror coating or a half mirror coating is performed on the glass or the acrylic. However, in the embodiment, the reflector 120 is not limited to having a coating; and, for example, a wire grid polarizer, etc., may be used.

For example, the reflector 120 includes multiple half mirrors arranged in parallel. The reflector 120 is a multimirror array in which multiple fine reflective surfaces are arranged in parallel. In the embodiment, the reflective surface of the reflector 120 may be a single surface. The reflector 120 may be a Fresnel mirror having a discontinuous surface.

For example, a lens 111 and a lens 112 are formed and bonded using the reflector 120 as a reference. Thereby, the reflective surface is provided in the interior of the corrective lens. Thus, the bulkiness of the display device can be suppressed by providing the optical element (in the example, the reflector) of the display device and the corrective lens of the eyeglasses as a single body.

Although a monocular HMD that uses one display device 100 is shown in FIG. 1, the embodiment is not limited thereto. A binocular HMD that uses two display devices 100 may be used.

The optical unit 150 is adjusted so that the image can be viewed from a point sufficiently distal to the reflective/transmissive unit 110. Thereby, the display device 100 may be used as a head-up display (HUD).

The refractive power of the corrective lens for the background light is different between viewers (users). For example, the refractive power of the corrective lens is adjusted according to the vision and/or preferences of the viewer.

For example, the first surface 10 has the first refractive power D1. The second surface 20 has a second refractive power D2. When the viewer 80 views the external environment, the background light Le passes through the first surface 10 and passes through the second surface 20. The viewer 80 views the background light Le that is refracted once at the first surface 10 and once at the second surface 20. On the other hand, when the viewer 80 views the image displayed by the display device, the image light Li is incident on the second surface 20, is reflected by the reflector 120, and is emitted from the second surface 20. The viewer 80 views the image light Li that is refracted twice at the second surface 20. For example, the refractive power (the first refractive power D1 and the second refractive power D2) of the reflective/transmissive unit 110 (the corrective lens) is adjusted so that the viewer 80 easily views the external environment (the transmission image). Therefore, there are cases where the image (the reflected image) that is formed of the image light Li refracted twice at the second surface 20 is difficult to view.

Conversely, in the display device according to the embodiment, the refractive power of the optical unit 150 for the image light Li is determined according to the refractive power of the reflective/transmissive unit 110 for the background light Le.

For example, the refractive power of the optical correction unit 130 for the image light Li is determined according to the refractive power of the reflective/transmissive unit 110 for the background light Le.

Thus, by adjusting the refractive power of the optical correction unit 130, the image that is formed of the image light Li passing through the optical unit 150 and the second surface 20 can be corrected to be easy to view. The transmission image and the reflected image can be corrected and viewed simultaneously.

The reflective/transmissive unit 110 is modified for each viewer. Accordingly, the design of the optical correction unit 130 also is modified for each viewer.

A refractive power D is the refractive power of the optical correction unit 130 for the image light Li. A refractive power D0 is the refractive power of the projector 140 for the image light Li; and the refractive power D0 is determined from the design guidelines of the projector 140, e.g., is determined separately from the refractive power D of the optical correction unit 130. For example, the relationship $D' = D + D0$ is satisfied, where $D'$ is the refractive power of the optical unit 150 for the image light Li. The refractive power D1 is the refractive power of the first surface 10; and the refractive power D2 is the refractive power of the second surface 20. For example, the optical unit 150 is designed to satisfy the following Formula (1). For example, the optical correction unit 130 is provided to satisfy Formula (1).

$$D = f(D1, D2, d) \tag{1}$$

Here, d is the distance between the surface 20 and the optical correction unit 130 along the optical path of the image light Li. The function f is, for example, $f(x, y, d) = (x - y)/(1 - d \times y)$. In other words, $D = (D1 - D2)/(1 - dxD2)$. Thereby, the image light Li is refracted appropriately before reaching the eye 81 of the viewer 80; and an easily-viewable display can be obtained.

The function f may be $f(x, y, d) = (x - y)/(1 - d \times y) + \alpha$. In other words, $D = (D1 - D2)/(1 - dxD2) + \alpha$ is satisfied. Here, $\alpha$ is a correction term. The error due to the incident position of the image light Li, etc., can be corrected by the correction term $\alpha$.

Thus, the refractive power D of the optical correction unit 130 is determined according to the difference between the first refractive power D1 and the second refractive power D2. Thereby, the transmission image and the reflected image both can be corrected according to different vision for each viewer.

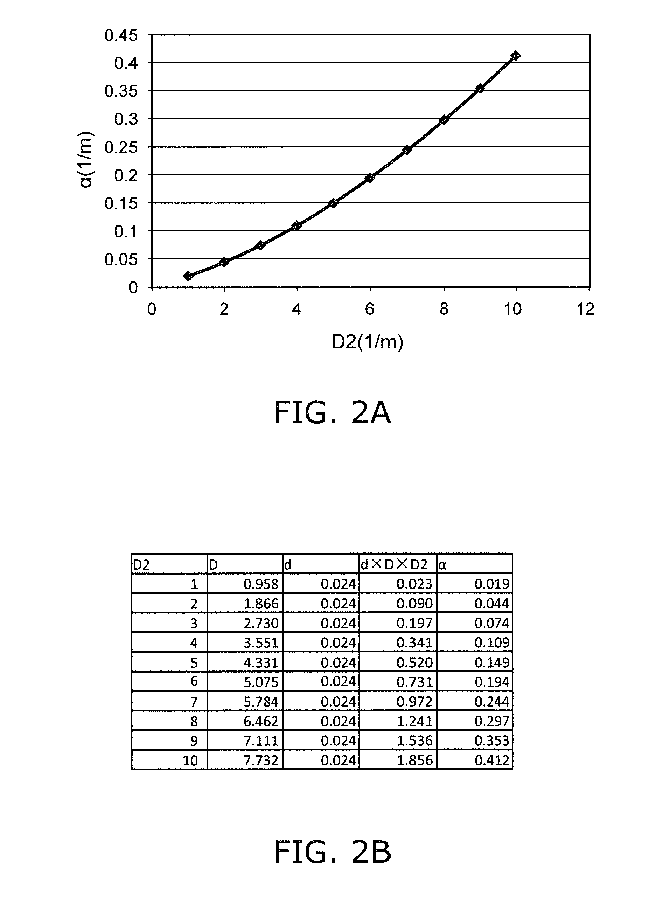

FIG. 2A and FIG. 2B are schematic views illustrating the refractive power.

FIG. 2A and FIG. 2B are optical simulation results showing the relationship between the refractive power D2 (1/m or diopters) of the second surface 20 and the correction term $\alpha$ (1/m) for the setting of $f(x, y, d) = (x - y)/(1 - d \times y) + \alpha$.

In the simulation, $D1$ is set to $D1 = 0$ (1/m); and $D2$ is changed from 1 to 10. In other words, a plano-concave lens is assumed as the reflective/transmissive unit 110. In the case where eyeglasses are assumed, the practical range of $D2$ is the range up to about 7. $d$ is set to d = 0.024 (m). The case is assumed where the travel direction of the image light Li is along the normal direction of the second surface 20.

When the correction term $\alpha$ is calculated by the simulation so that the image light Li is refracted and the appropriate image is obtained, the correction term $\alpha$ changes from about 0.019 to about 0.411 as the second refractive power D2 is changed from 1 to 10. Accordingly, it is favorable for the range of the correction term $\alpha$ to be about $\alpha \leq 0.5$. Similarly, in the case where a convex lens for farsightedness is assumed as the reflective/transmissive unit 110, the range of the correction term $\alpha$ is about $\alpha \geq -0.5$. In the embodiment, for example, the correction term $\alpha$ is set so that $-0.5 \leq \alpha \leq 0.5$ in the case where the incident angle at the reflective/transmissive unit 110 is less than 20 degrees.

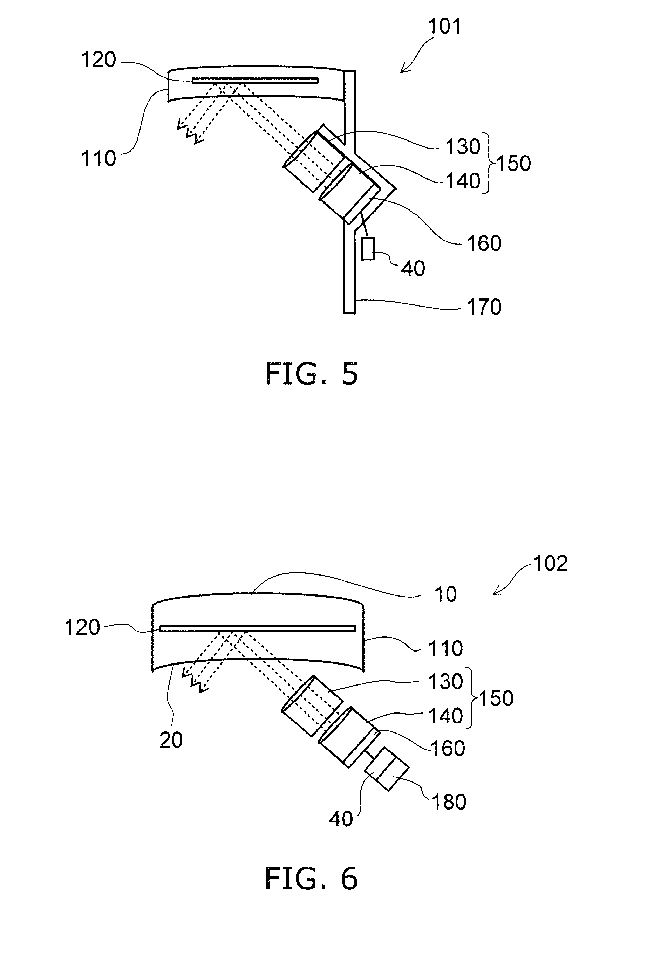

For example, the display device 100 is an eyeglasses-type display device. As described below, the reflective/transmissive unit 110, the optical unit 150, and the display unit 160 are held by an eyeglasses frame (referring to FIG. 5). The display device 100 is mountable to the head of the viewer 80 by the eyeglasses frame. It is favorable for the optical unit 150 and the display unit 160 to be disposed on the inner side of the eyeglasses frame. In other words, the optical unit 150 and the display unit 160 are disposed between the viewer 80 and the eyeglasses frame when the display device 100 is used (worn). Thereby, the viewer can use the display device 100 as normal eyeglasses; and discomfort can be reduced when using the display device.

Thus, the optical unit 150 is disposed at a side surface of the viewer 80. On the other hand, the reflective/transmissive unit 110 is disposed at the front as viewed by the viewer 80. Accordingly, in such a case, the image light Li is obliquely incident on the reflective/transmissive unit 110. The incident angle of the image light Li at the reflective/transmissive unit 110 is less than 90 degrees.

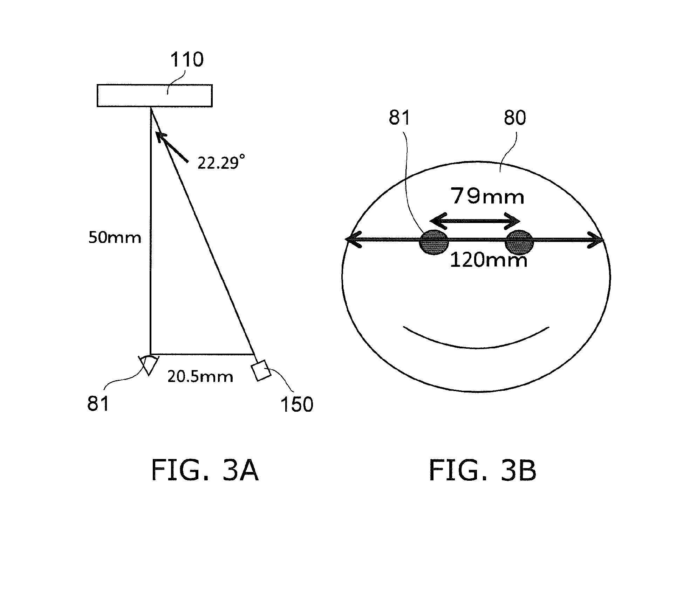

FIG. 3A and FIG. 3B are schematic views illustrating the incident angle of the image light.

For the configuration of the face of a human (a viewer) as shown in FIG. 3A and FIG. 3B, for example, the maximum distance between the eyes is about 79 mm; and the minimum bizygomatic breadth is about 120 mm. The incident angle is 22.29 degrees (°) in the case where the distance between the eyeball and the reflective/transmissive unit 110 is 50 mm and the image light Li is projected from the optical unit 150 (the projector 140) disposed to contact the face. In the embodiment, an incident angle θ of the image light Li at the reflective/transmissive unit 110 is, for example, not less than 20°.

In the case where the image light Li is obliquely incident on the reflective/transmissive unit 110, it is desirable for the refractive power of the optical unit 150 to be determined according to the incident angle of the image light Li at the reflective/transmissive unit 110. The correction term α is determined by considering the effects of the image light Li being obliquely incident.

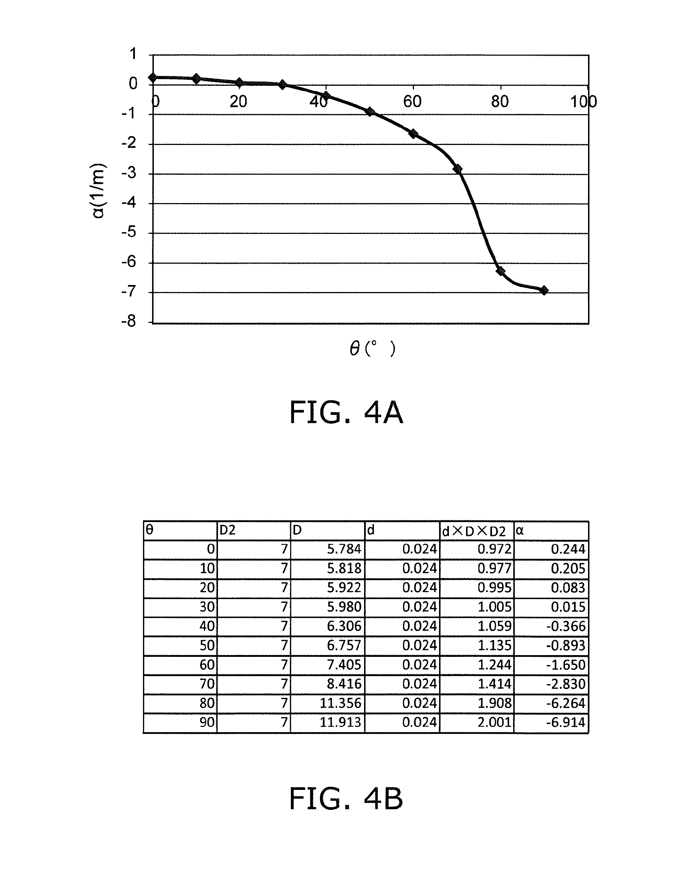

FIG. 4A and FIG. 4B are schematic views illustrating the refractive power.

FIG. 4A and FIG. 4B are optical simulation results showing the relationship between the correction term α (1/m) and the incident angle θ (°) of the image light Li at the reflective/transmissive unit 110. In this simulation as well, f(x, $y$, d) equals $(x - y)/(1 - d \times y) + α$, and the first refractive power D1 equals 0 (1/m). It is assumed that the second refractive power D2 equals 7 (1/m) and a plano-convex lens is used as the reflective/transmissive unit 110. Also, d = 0.024 (m).

α is calculated by the simulation so that the image light Li is refracted and the appropriate image is obtained. For example, when the incident angle θ is 0°, α is about 0.244; and α decreases as the incident angle θ increases. When the incident angle θ equals 70°, α equals -2.83; and when the incident angle θ equals 80°, α equals -6.264. The change of α is large when the incident angle θ is greater than 70°. When the incident angle θ is 80° or more, D becomes large which indicates that the correction is unnecessary. Accordingly, the incident angle θ is set to be 70° or less. In other words, the incident angle θ is set to be not less than 20° and not more than 70°. In such a case, the range of α is set so that $-3.0 \leq α \leq 3.0$. Thereby, even in the case where the image light Li is obliquely incident on the reflective/transmissive unit 110, the image light Li is refracted appropriately; and an easily-viewable display can be obtained.

Second embodiment

FIG. 5 is a schematic view illustrating a display device according to a second embodiment.

As shown in FIG. 5, the reflective/transmissive unit 110, the optical unit 150, and the display unit 160 are provided in the display device 101 as well. The display device 101 further includes a holder 170.

The holder 170 holds the reflective/transmissive unit 110, the optical unit 150, and the display unit 160. The holder 170 regulates the relative arrangement of the optical unit 150 and the reflective/transmissive unit 110 and the relative arrangement of the optical unit 150 and the display unit 160. The holder 170 is, for example, an eyeglasses frame.

For example, the optical correction unit 130 is modified for each viewer according to the refractive power of the reflective/transmissive unit 110. The optical correction unit 130 is attachable and removable to and from the holder 170. A mechanism is used in which the optical correction unit 130 is replaceable on the holder 170. Thereby, for example, common components other than the optical correction unit 130 may be used. Thereby, the productivity can be increased.

FIG. 6 is a schematic view illustrating another display device according to the second embodiment.

The display device 102 shown in FIG. 6 further includes an image correction unit 180. For example, the image correction unit 180 performs data processing according to the refractive power (the first refractive power D1 and the second refractive power D2) of the reflective/transmissive unit 110. The image information that includes the image light Li is derived by the data processing.

The image correction unit 180 may be provided as a single body with the processing unit 40 described above; or a portion of the image correction unit 180 or the entire image correction unit 180 may be provided separately.

By using the image correction unit 180, the aberration of the image light Li emitted from the display unit 160 is corrected. For example, there are cases where the correction performed using the optical correction unit 130 includes an optical error. The image quality can be increased by correcting the error using the image correction unit 180.

Specifically, various aberrations can be suppressed by performing an affine transformation of the image information to correct the aberrations. The aberration that occurs for the corrective lens (the reflective/transmissive unit 110) is determined according to the configuration of the corrective lens. Therefore, the image correction unit 180 performs the correction processing as a pair with the corrective lens. The conversion of the image information is not limited to an affine transformation. For example, the image distorts differently in each region inside the image. The distortion amounts can be derived by an optical simulator.

The image correction unit 180 may include correction parameters corresponding to the configuration of the corrective lens (the reflective/transmissive unit 110). The image correction unit 180 derives the image information included in the image light Li based on the predetermined parameters. Thereby, the amount of the calculations performed by the image correction unit 180 is reduced. The electrical power amount consumed by the display device 102 can be reduced.

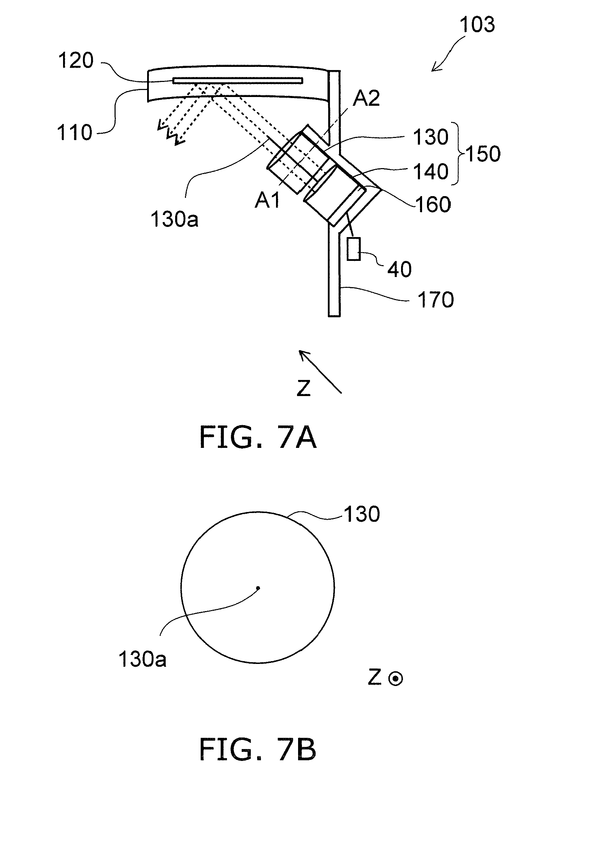

FIG. 7A and FIG. 7B are schematic views illustrating another display device according to the second embodiment.

In the display device 103, similarly to the display device 101, the optical correction unit 130 is replaceable on the holder 170.

FIG. 7B shows the cross section of the optical correction unit 130 along line A1-A2 shown in FIG. 7A. For example, the optical correction unit 130 has an optical axis 130a. A direction parallel to the optical axis 130a is taken as a Z-axis direction. The cross section shown in FIG. 7B is a cross section in a plane perpendicular to the Z-axis direction.

As shown in FIG. 7B, the configuration of the cross section of the optical correction unit 130 is a circle. By setting the cross-sectional configuration of the optical correction unit 130 to be a circle, the optical correction unit 130 can be mounted in any direction. For example, the optical correction unit 130 can be rotated any angle around the Z-axis direction.

In the case where astigmatism is corrected, it is favorable for the optical correction unit 130 to include a lens group having an anisotropic refractive power such as that for correcting astigmatic aberration. For example, a lens group that has a uniaxial refractive power such as that of a cylindrical lens is rotated around the optical axis. Thereby, the corrective power of the astigmatic aberration can be changed. Thereby, various astigmatic strengths can be accommodated by using one lens group having a uniaxial refractive power. The types of correction lens groups can be reduced; and the production cost can be reduced.

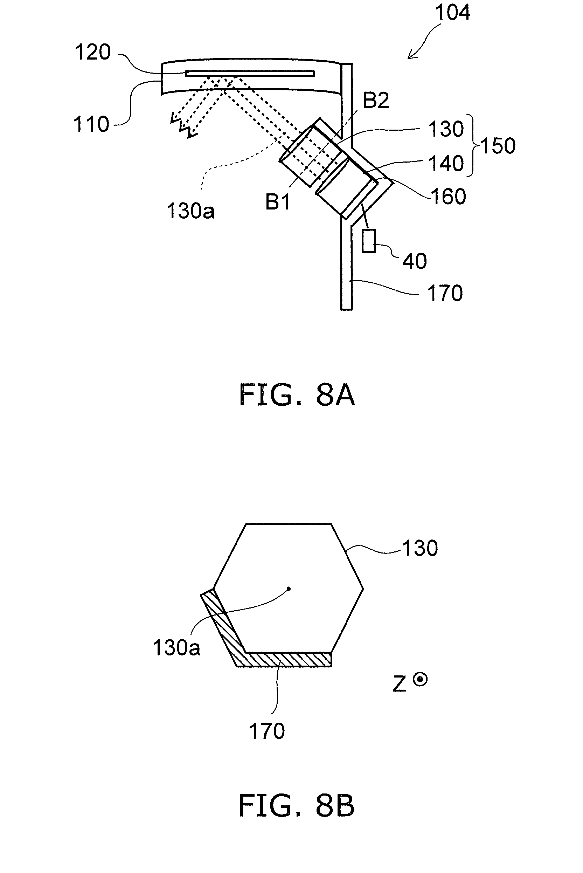

FIG. 8A and FIG. 8B are schematic views illustrating another display device according to the second embodiment.

In the display device 104 as well, the optical correction unit 130 is replaceable on the holder 170.

FIG. 8B shows a cross section of the optical correction unit 130 and the holder 170 along line B1-B2 shown in FIG. 8A. As shown in FIG. 8B, the cross-sectional configuration of the optical correction unit 130 in a plane perpendicular to the optical axis 130a is a polygon.

The cross-sectional configuration of the holder 170 is a configuration that matches the configuration of the polygon of the optical correction unit 130. For example, the holder 170 has a configuration corresponding to the length of the one side of the polygon and the size of the interior angle of the polygon. Thereby, the operation of adjusting the mounting direction is easy when the viewer mounts the astigmatism corrective lens.

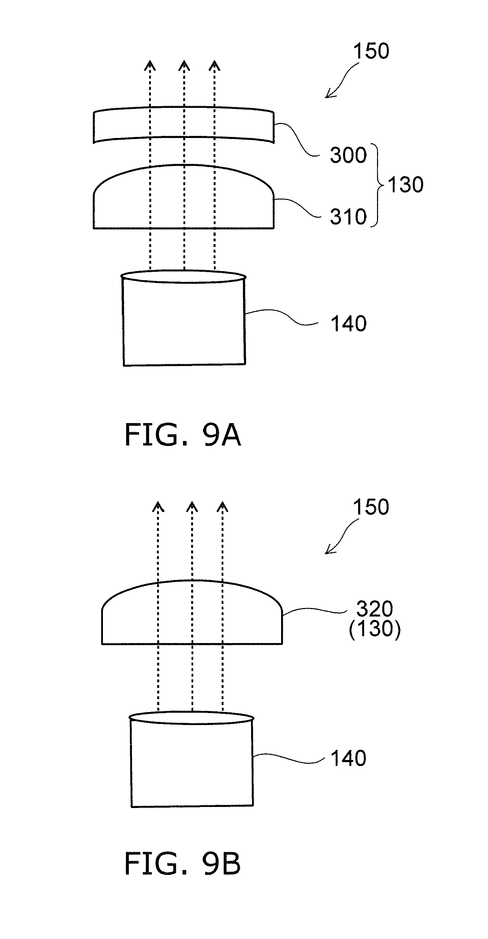

FIG. 9A and FIG. 9B are schematic views illustrating the optical unit according to the embodiment.

For example, the optical correction unit 130 can be configured easily by combining a cylindrical lens, a toric lens, and a spherical lens.

In the example shown in FIG. 9A, the optical unit 150 includes a spherical lens 300 and a cylindrical lens 310. For example, several types of spherical lenses are prepared for correcting nearsightedness and for correcting farsightedness. Several types of cylindrical lenses are prepared for astigmatism correction. The viewer can easily configure the optical correction unit 130 according to the viewer's vision by combining the two lenses, i.e., the spherical lens and the cylindrical lens.

A toric lens 320 is included in the optical unit 150 in the example shown in FIG. 9B. The toric lens 320 has the integrated refractive power of the refractive power of the spherical lens 300 and the refractive power of the cylindrical lens 310. The number of lenses can be reduced by substituting such a toric lens 320. For example, one lens can be used. Thereby, the optical correction unit 130 can be smaller; and it is possible for the display device to be smaller.

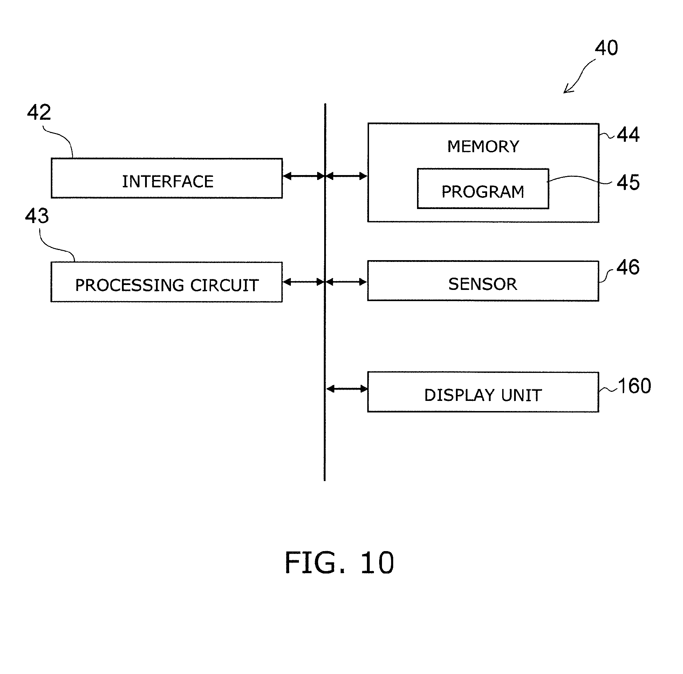

FIG. 10 is a schematic view illustrating the display device according to the embodiment.

FIG. 10 shows an example of the system configuration of the display device according to the embodiment. The example shown in FIG. 10 is an example of the display device according to the embodiment and does not necessarily match the actual module.

As shown in FIG. 10, the processing unit 40 includes, for example, an interface 42, a processing circuit (a processor) 43, and memory 44.

For example, the processing unit 40 acquires the image information by being connected to an external storage medium and/or a network via the interface 42. A wired or wireless method may be used for the external connection.

For example, a program 45 that processes the acquired image information is stored in the memory 44. For example, the image information is appropriately converted based on the program 45; and thereby, an appropriate display is performed by the display unit 160. The image information may be stored in the memory 44. The program 45 may be provided in the state of being pre-stored in the memory 44, may be provided via a network and/or a storage medium such as CD-ROM, etc., or may be appropriately installed.

The processing unit 40 may include a sensor 46. The sensor 46 may include, for example, any sensor such as a camera, a microphone, a positional sensor, an acceleration sensor, etc. For example, the image that is displayed by the display unit 160 is modified appropriately based on the information obtained from the sensor 46. Thereby, the convenience and ease of viewing of the display device can be improved.

For example, the image information, the information obtained from the sensor 46, etc., are processed based on the program 45 by the processing circuit 43.

Thus, the obtained image information is input to the display unit 160 from the processing unit 40; and the display is performed by the display device.

A portion of each block or each entire block of the processing unit 40 may include an integrated circuit such as LSI (Large Scale Integration), etc., or an IC (Integrated Circuit) chipset. Each block may include an individual circuit; or a circuit in which some or all of the blocks are integrated may be used. The blocks may be provided as a single body; or some blocks may be provided separately. Also, for each block, a portion of the block may be provided separately. The integration is not limited to LSI; and a dedicated circuit or a general-purpose processor may be used.

According to the embodiments, an easily-viewable display device can be provided.

In the specification of the application, "perpendicular" and "parallel" include not only strictly perpendicular and strictly parallel but also, for example, the fluctuation due to manufacturing processes, etc.; and it is sufficient to be substantially perpendicular and substantially parallel.

Hereinabove, embodiments of the invention are described with reference to specific examples. However, the embodiments of the invention are not limited to these specific examples. For example, one skilled in the art may similarly practice the invention by appropriately selecting specific configurations of components such as the display unit, the reflective/transmissive unit, the optical unit, the projector, the optical correction unit, etc., from known art; and such practice is within the scope of the invention to the extent that similar effects can be obtained.

Further, any two or more components of the specific examples may be combined within the extent of technical feasibility and are included in the scope of the invention to the extent that the purport of the invention is included.

Moreover, all display devices practicable by an appropriate design modification by one skilled in the art based on the display devices described above as embodiments of the invention also are within the scope of the invention to the extent that the spirit of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

**Claims**

1.  A display device (100, 101, 102, 103, 104), comprising:

    a display unit (160) to emit image light including image information;
    a reflective/transmissive unit (110) to reflect at least a portion of the image light and transmit at least a portion of background light; and
    an optical unit (150) provided between the display unit (160) and the reflective/transmissive unit (110) in an optical path of the image light,
    a refractive power of the optical unit (150) being determined according to a refractive power of the reflective/transmissive unit (110) for the background light passing through the reflective/transmissive unit (110).

2.  The device (100, 101, 102, 103, 104) according to claim 1, wherein
    the reflective/transmissive unit (110) has a first surface (10) and a second surface (20) and includes a reflector (120) provided between the first surface (10) and the second surface (20),
    the image light is incident on the second surface (20),
    and
    the reflector (120) reflects the image light.

3. The device (100, 101, 102, 103, 104) according to claim 2, wherein the refractive power of the reflective/transmissive unit (110) is determined according to a first refractive power of the first surface (10) and a second refractive power of the second surface (20).

4. The device (100, 101, 102, 103, 104) according to claim 3, wherein the refractive power of the optical unit (150) is determined according to a difference between the first refractive power and the second refractive power.

5. The device (100, 101, 102, 103, 104) according to claim 4, wherein the refractive power of the optical unit (150) is determined according to an incident angle of the image light at the reflective/transmissive unit (110).

6. The device (100, 101, 102, 103, 104) according to claim 5, wherein the incident angle is less than 90 degrees.

7. The device (100, 101, 102, 103, 104) according to claim 6, wherein the incident angle is not less than 20 degrees and not more than 70 degrees.

8. The device (100, 101, 102, 103, 104) according to any of claims 5-7, wherein
the optical unit (150) includes
a projector (140) to project the image light, and an optical correction unit (130) provided in the optical path of the image light, and
relationships

$$D = (D1 - D2)/(1 - d{\times}D2) + \alpha \qquad (1)$$

and

$$-3.0 \leq \alpha \leq 3.0 \qquad (2)$$

are satisfied,
where

$D$ is a refractive power of the optical correction unit (130),
$D1$ is the first refractive power,
$D2$ is the second refractive power, and
$\alpha$ is a value determined according to the incident angle.

9. The device (101, 103, 104) according to any of claims 1-8, further comprising a holder (170) holding the display unit (160), the reflective/transmissive unit (110), and the optical unit.

10. The device (100, 101, 102, 103, 104) according to any of claims 1-7, wherein
the optical unit (150) includes
a projector (140) to project the image light, and an optical correction unit (130) having a refractive power determined according to the refractive power of the reflective/transmissive unit (110).

11. The device (101, 103, 104) according to claim 10, further comprising a holder (170) to hold the display unit (160), the reflective/transmissive unit (110), and the optical unit (150),
wherein the optical correction unit (130) is attachable and removable to and from the holder (170).

12. The device (104) according to claim 11, wherein a configuration of a cross section of the optical correction unit (130) in a plane perpendicular to an optical axis of the optical correction unit (130) is a polygon.

13. The device (103) according to claim 11, wherein a configuration of a cross section of the optical correction unit (130) in a plane perpendicular to an optical axis of the optical correction unit (130) is a circle.

**14.** The device (101, 103, 104)) according to any of claims 10-13, wherein the optical correction unit (130) includes at least one of a toric lens, a cylindrical lens, or a spherical lens.

**15.** The device (102) according to any of claims 1-14, further comprising an image correction unit (180) to derive the image information according to the refractive power of the reflective/transmissive unit (110).

**16.** The device (102) according to claim 15, wherein the image correction unit (180) derives the image information based on a parameter corresponding to the reflective/transmissive unit (110), the parameter being predetermined.

**17.** The device (100, 101, 102, 103, 104) according to any of claims 1-16, wherein the reflective/transmissive unit (110) includes a plurality of reflective surfaces arranged in parallel, the plurality of reflective surfaces reflecting at least a portion of the incident light.

**18.** The device (100, 101, 102, 103, 104) according to any of claims 1-17, wherein the reflective/transmissive unit (110) corrects at least one of nearsightedness, farsightedness, or astigmatism.

**19.** A display device (100, 101, 102, 103, 104), comprising:

a display unit (160) to emit image light including image information; and
an optical unit (150), the image light passing through the optical unit (150),
the image light emitted from the optical unit (150) being incident on a reflective/transmissive unit (110),
the reflective/transmissive unit (110) reflecting at least a portion of the incident image light,
the reflective/transmissive unit (110) transmitting background light,
a refractive power of the optical unit (150) being determined according to a refractive power of the reflective/transmissive unit (110) for the background light passing through the reflective/transmissive unit (110).

**20.** The device (100, 101, 102, 103, 104) according to claim 19, wherein
the reflective/transmissive unit (110) has a first surface (10) and a second surface (20) and includes a reflector (120) provided between the first surface (10) and the second surface (20),
the image light is incident on the second surface (20), the reflector (120) reflects the image light,
the refractive power of the reflective/transmissive unit (110) is determined according to a first refractive power of the first surface (10) and a second refractive power of the second surface (20),
the optical (150) unit includes
a projector (140) to project the image light, and an optical correction unit (130) provided in an optical path of the image light, and
relationships

$$D = (D1 - D2)/(1 - d{\times}D2) + \alpha \qquad (1)$$

and

$$-3.0 \leq \alpha \leq 3.0 \qquad (2)$$

are satisfied,
where

D is a refractive power of the optical correction unit (130),
*D1* is the first refractive power,
*D2* is the second refractive power, and
$\alpha$ is a value determined according to the incident angle of the image light at the reflective/transmissive unit (110).

FIG. 1

FIG. 2A

| D2 | D | d | d×D×D2 | α |
|---|---|---|---|---|
| 1 | 0.958 | 0.024 | 0.023 | 0.019 |
| 2 | 1.866 | 0.024 | 0.090 | 0.044 |
| 3 | 2.730 | 0.024 | 0.197 | 0.074 |
| 4 | 3.551 | 0.024 | 0.341 | 0.109 |
| 5 | 4.331 | 0.024 | 0.520 | 0.149 |
| 6 | 5.075 | 0.024 | 0.731 | 0.194 |
| 7 | 5.784 | 0.024 | 0.972 | 0.244 |
| 8 | 6.462 | 0.024 | 1.241 | 0.297 |
| 9 | 7.111 | 0.024 | 1.536 | 0.353 |
| 10 | 7.732 | 0.024 | 1.856 | 0.412 |

FIG. 2B

FIG. 3A

FIG. 3B

FIG. 4A

| θ | D2 | D | d | d×D×D2 | α |
|---|---|---|---|---|---|
| 0 | 7 | 5.784 | 0.024 | 0.972 | 0.244 |
| 10 | 7 | 5.818 | 0.024 | 0.977 | 0.205 |
| 20 | 7 | 5.922 | 0.024 | 0.995 | 0.083 |
| 30 | 7 | 5.980 | 0.024 | 1.005 | 0.015 |
| 40 | 7 | 6.306 | 0.024 | 1.059 | -0.366 |
| 50 | 7 | 6.757 | 0.024 | 1.135 | -0.893 |
| 60 | 7 | 7.405 | 0.024 | 1.244 | -1.650 |
| 70 | 7 | 8.416 | 0.024 | 1.414 | -2.830 |
| 80 | 7 | 11.356 | 0.024 | 1.908 | -6.264 |
| 90 | 7 | 11.913 | 0.024 | 2.001 | -6.914 |

FIG. 4B

FIG. 5

FIG. 6

FIG. 7A

FIG. 7B

FIG. 8A

FIG. 8B

FIG. 9A

FIG. 9B

FIG. 10

Europäisches
Patentamt

European
Patent Office

Office européen
des brevets

## EUROPEAN SEARCH REPORT

Application Number

EP 15 15 8776

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 384 999 B1 (CROSBY DAVID NICHOLAS [GB] ET AL) 26 February 2013 (2013-02-26) * figures 1,2,5-9,11 * * column 1, lines 18-41 * * column 7, line 7 - column 12, paragraph 34 * | 1-20 | INV. G02B27/01 G02F1/1335 |
| X | JP 2014 092696 A (SEIKO EPSON CORP) 19 May 2014 (2014-05-19) * the whole document * * -& US 2014/139927 A1 (HIRAIDE NORIAKI [JP]) 22 May 2014 (2014-05-22) * paragraphs [0044] - [0082] * * figures 1,8 * | 1,10,19 | |
| X | US 2011/051076 A1 (SUGIHARA RYOHEI [JP] ET AL) 3 March 2011 (2011-03-03) * abstract * * * paragraphs [0047] - [0074], [0091] - [0101] * * figures 1,7-10,19-22 * | 1,10,19 | |
| X | WO 2008/156675 A1 (VITALE ANTHONY [US]) 24 December 2008 (2008-12-24) * abstract * * * paragraphs [0041] - [0045], [0048] - [0052], [0061] - [0064] * * figures 1-4,6,8-10,18,19 * | 1-20 | TECHNICAL FIELDS SEARCHED (IPC) G02B G02F |

The present search report has been drawn up for all claims

| Place of search | Date of completion of the search | Examiner |
|---|---|---|
| Berlin | 22 September 2015 | Moroz, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                               
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 15 8776

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2015

| Patent document cited in search report | | Publication date | Patent family member(s) | | Publication date |
|---|---|---|---|---|---|
| US 8384999 | B1 | 26-02-2013 | NONE | | |
| JP 2014092696 | A | 19-05-2014 | CN | 203825293 U | 10-09-2014 |
| | | | JP | 2014092696 A | 19-05-2014 |
| | | | US | 2014139927 A1 | 22-05-2014 |
| US 2014139927 | A1 | 22-05-2014 | CN | 203825293 U | 10-09-2014 |
| | | | JP | 2014092696 A | 19-05-2014 |
| | | | US | 2014139927 A1 | 22-05-2014 |
| US 2011051076 | A1 | 03-03-2011 | CN | 102004316 A | 06-04-2011 |
| | | | JP | 5290092 B2 | 18-09-2013 |
| | | | JP | 2011053367 A | 17-03-2011 |
| | | | US | 2011051076 A1 | 03-03-2011 |
| WO 2008156675 | A1 | 24-12-2008 | NONE | | |

EPO FORM P0459

For more details about this annex : see Official Journal of the European Patent Office, No. 12/82